(19) Europäisches Patentamt
European Patent Office
Office européen des brevets

(11) **EP 2 784 731 A1**

(12) **EUROPEAN PATENT APPLICATION**

(43) Date of publication:
01.10.2014 Bulletin 2014/40

(51) Int Cl.:
*G06Q 10/06* (2012.01)     *H04L 12/24* (2006.01)

(21) Application number: 13397547.4

(22) Date of filing: 23.12.2013

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: 25.03.2013 GB 201305370<br><br>(71) Applicant: **Celkee Oy**<br>**33900 Tampere (FI)** | (72) Inventors:<br>• **Vättö, Kimmo**<br>33880 Lempäälä (FI)<br>• **Lempinen, Sami**<br>37500 Lempäälä (FI)<br>• **Kanner, Juuso**<br>33950 Pirkkala (FI)<br><br>(74) Representative: **Värilä, Risto Sakari**<br>**IPR Partners Oy**<br>**Hietalahdenranta 13**<br>**00180 Helsinki (FI)** |

(54) **Electronic arrangement and related method for dynamic resource management**

(57)    Electronic arrangement (106, 108, 200, 300, 400, 600, 700) for managing system resources (102, 104) based on user perception, the arrangement comprising a processing entity (124) and a memory entity (120) for processing and storing data, respectively, and a data transfer entity (128, 202) for receiving and transmitting data, the arrangement being configured to transmit data identifying a recurring, substantially continuous online survey (114) comprising a number of questions (301, 401) regarding the managed resources to a plurality of respondents (110) each of which being associated with at least one terminal device (112) reachable via said communications network (116), wherein the arrangement is configured to customize the survey (114) to each respondent relative to at least one question through indication of previous answer by the user to the same question already answered during a previous round of the survey so as to enable the respondent recall the previous answer and scale the current answer consistently, receive data (204) indicative of answers to the questions of the survey provided by said plurality of respondents via the associated terminal devices (112), determine on the basis of the indicated answers a number of representative respondents (306, 406) from said plurality, wherein the answers by the representative respondents matches best, according to predetermined criteria, with the temporally later given answers of larger population of the respondents, detect an emerging temporal trend based on the answers, wherein the answers of the representative respondents are given sole or at least more weight than the other respondents, and generate a notification signal (106B, 304, 404) based on the detected trend according to predetermined criteria to facilitate optimization of the managed resources. A related method is presented.

Figure 1

**Description**

FIELD OF THE INVENTION

Generally the invention relates to electronic computing devices and communication systems. In particular, however not exclusively, the present invention pertains to dynamically evaluating and (re)allocating resources in technical contexts such as computer network environments.

BACKGROUND

Generally managing resources such as various facilities in communication or computer networks may be based on a fixed or dynamic scheme. In fixed schemes the necessary computing, memory and communications capacity, such as the number of servers and the data transfer connections, is typically estimated beforehand to cover the apparent need. For instance, in shared computing environments where central resources are exploited by satellite users the number of clients to the central resources (such as a file server) and their usage profiles may be first determined to facilitate acquiring enough data processing and transfer capacity to meet the estimate, possibly with some safety margin. Also the required amount and nature of manpower, such as the number of system operators and their daily or weekly allocation (working hours, etc.) may be correspondingly determined using commonly accepted 'rules of thumb' or some more accurate predetermined metrics.

In dynamically controllable environments, resource management may be executed according to the prevailing or recently encountered conditions. Such conditions and related metrics are then monitored and calculated, respectively, so that the current status of resource usage may be determined and potentially corrective actions taken. For example, allocation of additional communication resources such as data bandwidth may be effectuated when the monitored utilization rate exceeds a predetermined threshold such as 90%. Dynamic resource management may be performed utilizing automated equipment such as a computer system provided with necessary logic to monitor a number of technical parameters of the target environment to derive the metrics and (re)allocate the resources accordingly.

Notwithstanding the different benefits the existing resource management solutions for technical purposes may certainly offer, some evident drawbacks arguably remain therewith. Namely, fixed schemes are obviously incapable of adapting to varying conditions that differ from the original or assumed ones at the actual time of resource allocation, and the initial resource allocation may eventually turn out inaccurate such as inadequate. Excessive amount of basically redundant resources is in such a scenario to be originally allocated in case their sufficiency has to be guaranteed regardless of the actual operating conditions.

Further, e.g. ad hoc style or mere rule of thumb -based dynamic resource management methods seldom provide particularly accurate results either, and the execution thereof may nevertheless happen too late, i.e. the problems associated with sub-optimum management have already escalated to an extent that has caused possibly irreparable damages. Naturally, computerized resource allocation methods may be inherently designed to react rapidly to changing conditions but even them usually utilize overly simplistic, numeric decision-making logic and associated criteria such as comparison of measured run-time parameters with predetermined threshold values, wherein the comparison result is then indicative of the likelihood of resource shortfall.

SUMMARY

The objective of the present invention is to at least alleviate one or more of the aforementioned defects relating to the prior art resource management systems and methods.

The objective is achieved by various embodiments of an electronic arrangement and related method described in more detail hereinafter.

According to one aspect, an electronic arrangement, such as one or more servers, for managing system resources based on user perception, the arrangement comprising a processing entity and a memory entity for processing and storing data, respectively, and a data transfer entity for receiving and transmitting data, is configured to host a recurring online survey comprising multiple survey rounds and a number of questions regarding the managed resources, and thereby to

transmit, via the data transfer entity, data identifying the recurring, substantially continuous online survey to a plurality of user terminals reachable via said communications network, each terminal being associated with a survey respondent, wherein the arrangement is configured to customize the survey to each respondent relative to at least one question through indication of previous answer by the user to the same question already answered during a previous round of the survey so as to enable the respondent recall the previous answer and scale the current answer consistently,

receive, via the data transfer entity, data indicative of answers to the questions of the survey provided by said plurality of respondents via the associated terminal devices,

determine, by the processing entity, on the basis of the indicated answers a number of representative respondents from said plurality, wherein the answers by the representative respondents matches best, according to predetermined criteria, with the temporally later given answers of larger population of the respondents,

detect, by the processing entity, an emerging temporal trend based on the answers, wherein the answers of the representative respondents are given sole or at least more weight than the other respondents, and

generate a notification signal based on the detected trend according to predetermined criteria to enable optimization of the managed resources in the light of the trend.

In the above, the terminals of the respondents may be directly connected to the communications network where the arrangement is operable, i.e. located in or at least functionally connected to by means of the data transfer entity, or perhaps more commonly, the data transfer connection may be established via a plurality of intermediate elements such as intermediate networks. The networks may include computer networks like local area networks, wide area network(s) such as the Internet, and/or various wireless networks such as cellular network(s). The arrangement is not limited to any particular communication infrastructure or underlying hardware solution.

Regarding the aforementioned association, the respondents may each own or carry a (personal) terminal device and/or utilize common devices through which they answer the survey and optionally consume the analysis results. The arrangement may store information that enables addressing the data to the respondents, such as terminal identifying, terminal-executed survey application identifying and/or respondent identifying information. In some embodiments, the survey may be effectuated via a web interface such as a web browser such that the survey questions are provided and/or answers collected via it.

The questions of the survey that relate to the managed resources such as system resources may be based on QoS (Quality of Service) and related selected KPIs (Key Performance Indicator) often utilized in IT (Information Technology) and network environments such as service availability ('How do you rate service accessibility?', etc.), achieved data transfer speed ('Have you noticed congestion...'), latency, incident response and resolution times, availability of computing resources, availability of data storage resources, overall satisfaction, etc.

The at least one question regarding which a previous answer is indicated naturally preferably remains at least substantially the same between the repeated rounds of the recurring survey to enable statistically meaningful comparison of the received answers for the purposes of trend detection, but a skilled reader will also realize that minor changes may still be introduced thereto regarding e.g. the used phrasing as long as the semantic meaning of the question stays substantially similar (and the answers thereby mutually comparable). In generally, the survey may still evolve over time such that new questions are added thereto and old ones removed between the rounds.

In one embodiment, the aforesaid survey the execution and results analysis of which is controlled by the arrangement includes a number of open-ended questions and/or comment fields (i.e. items enabling free-form commenting). Alternatively or additionally, the survey may include, and preferably includes, a number of closed format questions (e.g. list of items, category, ranking, scaled, quantity, etc.). The questions may be of mutually similar or different format. For example, continuous scale, Likert scale and/or multiple choices format questions may be utilized. Preferably the survey encompasses both quantitative and qualitative aspects. The questions that are answered using e.g. a predetermined scale may be considered as quantitative whereas e.g. the free-form comments may represent the qualitative side.

In one other, either supplementary or alternative, embodiment the arrangement is configured to transmit said data to and/or receive said data from the respondent(s) via an application running on the associated terminal device, e.g. a so-called native application. Alternatively or additionally, web application, hybrid application and/or dedicated web application(s) may be utilized for survey provision, answers collection and/or results analysis. The arrangement may optionally host the application. The arrangement may be configured to transmit the data by sending a message defining survey questions to a respondent (preferably his/her terminal device), sending an application defining survey questions to a respondent, sending a message with a link to a service such as service web page for answering the survey, and/or sending a triggering or scheduling signal to a terminal to activate surveying on the basis of pre-stored survey made previously available in the terminal. In the case of closed format questions, the arrangement is preferably further configured to indicate the allowed range of answers such as predefined answer scale or the different discrete answer options of a multiple choice question to the respondent.

In various embodiments, e.g. a dashboard-style UI (user interface) may be provided by the arrangement to answer the survey and/or deal with the results. The arrangement may be configured to indicate predetermined statistical information derived on the basis of the survey via a graphical UI that may incorporate at least one element selected from the group consisting of: histogram, bar chart, stacked bar chart, graph, plot, and text indicative of free-form comment(s) by the respondent(s). The UI may be provided with a number of user-selectable or adjustable data processing tools such as filtering tools as described in further detail hereinafter.

Depending on the embodiment, survey answers may be collected (and the survey itself provided or notified by means of e.g. reminders to the predetermined respondents) periodically according to a predetermined schedule, e.g. daily, weekly or monthly, or on the basis of fulfillment of some other triggering condition. A minimum frequency to answer the survey, a so-called heartbeat, may be determined but in some embodiments, the respondents may also answer the survey more frequently if they like. In some embodiments multiple answers to the same question given by a respondent during a survey round may be utilized such that the most recent answers are taken into account in the analysis and resulting statistics. Alternatively, both the previous and current answer may be capitalized using a higher temporal resolution for the analysis and data storage than the actual survey round, or 'reporting period'. The arrangement may be configured to transmit a reminder to a respondent the answer(s) of which have not been received regarding a certain survey round. Alternatively or additionally, arrangement-related functionality may be blocked from such respondent. For example, the UI of the arrangement to inspect the survey results may be blocked or provided only with limited functionality (limited features) until the missing answers are provided. In contrast, the respondents who have been active in providing input to the arrangement according to predetermined criterion may be awarded and provided with e.g. additional user rights potentially yielding extra features in the UI, more comprehensive access to the available data, etc. Thus the arrangement and especially the UI thereof may be personalized based on e.g. user activity among other factors.

In one further, either supplementary or alternative, embodiment the indication of the previous answer may include a visually distinguishable, however non-disturbing pointer on a visualized answer scale, such as a shadowed or grayed, i.e. 'grayscale', pointer indicative of the previous answer.

In a further, either supplementary or alternative, embodiment the arrangement is configured to receive technical measurement data and/or control data, or generally operation parameters, regarding the managed resources such as hardware, network and/or service. Such data may be optionally received from the managed resources themselves. For example, network management entity or service management system may provide the data. The technical data may be indicative of performance and/or utilized control parameters including PKIs regarding the resources, such as achieved transfer rate, memory usage, processor usage, service delay, power density, power usage effectiveness, disk space allocation, etc. Such data may be applied with the survey answers to derive the status of resources or resource management and facilitate optimization thereof.

In a further, either supplementary or alternative, embodiment the arrangement is configured to determine the representative respondents, i.e. trend predictors or 'trend-setters', through calculation of statistical dependence such as correlation between the answers of an individual and the answers of a wider group, e.g. the average answers in said wider group that may refer to all respondents or a selected other reference group of respondents, for instance. Individuals whose views based on the answers seem to be generally followed by the reference group with a delay may be selected as representative, reliable respondents whose opinions thus represent and predict the aggregate view of the reference group members with a high confidence level. The time delay, or 'time shift', utilized between the answers in calculation may be predetermined or flexibly altered.

In practice, the reliability of the respondents can be determined and the representative, most reliably trend predicting, respondents found using a so-called sliding time window approach where the correlation between the individual's answers in the beginning of a time window and the larger sample trend of the reference group at the end of the time window, i.e. separated by the utilized time shift, is recorded. Each respondent may be awarded a weight score based on the correlation, and the sliding time window can be moved forward and the same analysis performed again. A trend-setter score for each user may be obtained. The applied correlation may be Spearman's rank correlation coefficient among other feasible options. In some embodiments, social amplification may be utilized in determining the representative users as described in further detail hereinlater.

Generally in connection with various embodiments of the present invention, the arrangement may be configured to post-process the gathered raw data indicative of survey answers for consumption through service UI and/or for analysis and optionally corrective purposes utilizing at least one technique selected from the group consisting of: data summarization, data summarization in scope, data summarization in time, averaging, calculation of standard deviation, correlation, natural language processing, filtering, and threshold-filtering. In particular, trends may be detected in the data utilizing at least one technique selected from the group consisting of: simple linear regression, linear regression, a least squares method, weighted least squares estimation, autoregressive modeling, regression analysis, autoregressive moving average modeling, and generalized linear modeling. Again, social amplification may be utilized in the procedure of trend detection. Trend(s) may be basically detected relative to any performance indicia such as KPIs (key performance indicators) based on the raw data or derived utilizing the raw data.

Regarding the scaling of the resolution of the data analysis and/or representation in different embodiments of the arrangement, the respondents' views on the managed resources such as a network service may be summarized to day and week level as an example of temporal scaling and/or grouped in relation to different user groups whereto the respondents have been allocated as an example of spatial scaling. Qualitative data such as free-form comments provided by the respondents may be subjected to natural language analysis with related stochastic, probabilistic and/or statistical method(s).

The raw data indicative of survey answers and optional other gathered data such as technical measurement or control data may be stored in the memory and analysis tasks be subjected thereto e.g. periodically and/or or upon need as triggered by user(s) via the UI of the arrangement, for example.

In a further, either supplementary or alternative, embodiment the notification signal may include a message output via the UI of the arrangement e.g. visually and/or audibly. Alternatively or additionally, the signal may include a message sent to an external entity such as (human) administrator of the managed resources, or an automatic resource provisioning entity.

Indeed, yet in a further, either supplementary or alternative, embodiment the arrangement may further comprise at least portion of an automated resource provisioning entity that is configured to (re-)allocate the managed resources in response to the notification signal. For example, regarding a managed network service, additional computing or data transfer resources may be allocated to the detected bottlenecks from less critical uses to enhance the perceived QoS and related KPIs. Previously unused resources may be allocated instead of or in addition to the reallocation of already exploited ones.

In another aspect, a method for managing system resources to be performed by an electronic arrangement operable in a communications network, comprises transmitting data identifying a recurring online survey comprising multiple survey rounds and a number of questions regarding the managed system resources to a plurality of terminal devices reachable via said network, each terminal device being associated with a survey respondent, wherein the online survey is customized to each respondent relative to at least one question through indication of previous answer by the user to a similar question already answered during a previous round of the survey so as to enable the respondent recall the previous answer and scale the current answer consistently, receiving data indicative of answers to the questions of the survey provided by said plurality of respondents via the associated terminal devices,

determining on the basis of the indicated answers a number of representative respondents from said plurality, wherein the answers by the representative respondents matches best, according to predetermined criteria, with the temporally later given answers of larger population of the respondents, such as the majority or overall population of the respondents,

detecting an emerging temporal trend based on the answers, wherein the answers of the representative respondents are given sole or at least more weight than the other respondents, and

generating a notification signal, such as alarm signal, based on the detected trend according to predetermined criteria to enable optimization of the managed system resources in the light of the trend.

The previously presented considerations concerning the various embodiments of the arrangement may be flexibly applied to the embodiments of the method mutatis mutandis as being appreciated by a person skilled in the art.

The utility of the present invention arises from a plurality of issues depending on each particular embodiment thereof. Generally, the invention proposes an innovative approach for leveraging (end-)user input for resource management including computer services, network management, and e.g. project or process management (one shall notice that actually in many environments service or resource management in general may indeed be considered as a form of substantially continuous project/process management). In various embodiments of the invention, user or generally human perception of the managed resources such as technical services may be cleverly utilized to complement traditional service and network management methods regarding incident management, event management, problem management, network optimization, network configuration and performance management activities. The suggested solution taking advantage of user perception therefore yields superior performance over many traditional management solutions that mostly rely on monitoring few predetermined status indicators and adjusting the resource management according to related overly simplistic logic.

Different embodiments of the present invention provide an automated framework for collecting coherent, comparable data thanks to the guidance given such as previous answer or more thorough answer history indicated to the respondents upon obtaining new answers, determining, based on the collected comparable data, the most reliable sources (respondents) of information, i.e. representative respondents, and calculating different KPIs and detecting associated mature and emerging trends with elevated reliability due to the emphasized weight of the reliable data sources in data analysis.

In contrast, most prior art surveys are conducted on 'start with a blank page' principle - in other words, even repetitive surveys do not provide the respondent with any indication of what answers they have (possibly) provided in the past for the same question. This causes noise in recurring surveys with little or no variance in questions, as only short-term thinking gets reflected in responses, which is overcome by the present invention as the required continuity in the opinion forming and opinion scaling, is preserved by showing each respondent e.g. his/her latest answers. Furthermore, starting always with a blank response page may discourage respondents from expressing small or subtle changes in opinion. Especially with a system using visual continuous or analogous scale (as opposed to, e.g., Likert scale) input for responses such approach may result in basically insufficient data capture. The suggested approach enables filling out the survey faster and encourages the respondents to express even subtle changes. Consequently, the respondents can focus on what has changed - as opposed to repeating themselves, whereupon the arrangement can identify & report finer granularity trends compared to traditional surveys. Further, most traditional survey systems typically focus on providing characteristic data over a large number of respondents over a rather long time period (for example, quarterly or annually). Thus, such a survey is likely to miss the trends about to emerge and the first signals of change. The solution suggested herein may highlight emerging trends and generally weak signals rapidly by either displaying them separately in the UI or by altering their rank if they are in a mix with other items, for instance.

Yet from a practical standpoint, the proposed methodology may be realized as an electronic arrangement such as a computer arrangement and related method for collectively acquiring, post-processing and prioritizing user input. Through collaborative processing and social amplification techniques based on machine generated data the solution is enabled to highlight emerging trends and weak signals as input to service and network management actions improving the performance, availability, quality of the service or network operations. The solution exploits a novel, both motivating and collaborative, technique to engage the users to provide substantially continuous data flow to network management operations when applicable. The end-user input may be correlated with existing network or service level metrics to improve the quality and impact of the services and network management operations. The arrangement learns through survey input processing who are the potential trend predictors, i.e. the representative end users who are the most knowledgeable and perceive the current status and trends best among the respondents. The arrangement provides a means to focus to the input from these competent end-users only.

The solution preferably contains a visual UI (e.g. 'dashboard') that makes it both motivating and easy for the end-users to adopt and engage for the survey process and yet easy and straightforward for the management to spot the most valuable data and use that as input e.g. for IT services or computer network management actions. The UI may be utilized to request the arrangement to provide desired type of analysis and representations of data or phenomena underlying the data. The arrangement may e.g. periodically or substantially continuously process the available data for keeping different intermediate analysis results and final analysis results up-to-date so as to enable latency-free exploitation thereof at the receipt of related input query provided via the UI.

The expression "a number of" refers herein to any positive integer starting from one (1), e.g. one, two, or three.

The expression "a plurality of" refers herein to any positive integer starting from two (2), e.g. two, three, or four.

The term "online" in connection with "survey" refers herein to any survey answered utilizing a computer device, such as a desktop computer, a laptop computer, a tablet, a PDA (personal digital assistant), or a mobile phone (e.g. so-called smartphone), wherein indication of answers is communicated over a communications connection or a communications network.

The term "recurring survey" refers to a multi-round, iterate survey in which at least part of the questions in multiple rounds are at least substantially mutually similar if not completely the same. The rounds may be bound to time and/or other references such as process or project steps.

The term "respondent" refers herein to any entity, typically a natural person, answering the survey and providing thus input for the associated analysis such as trend detection. Depending on the embodiment and related context, the respondents may include resource users such as device/product, system or service users, resources themselves such as project workers (i.e. human resources), decision-makers such as management personnel, quality assurance personnel, operators, administrators, etc. Nevertheless, in typical embodiments the entities providing the answers (i.e. acting as respondents) and having access to the analysis results such as trend recognition results via the provided UI have at least some overlap. In some embodiments the respondents may include computer entities instead of or in addition to human respondents.

Different embodiments of the present invention are disclosed in the dependent claims.

BRIEF DESCRIPTION OF THE RELATED DRAWINGS

Next the present invention is described in more detail with reference to the appended drawings in which

Fig. 1 illustrates a possible use scenario for the embodiments of the present invention and related entities.

Fig. 2 is a conceptual representation of an embodiment of the suggested arrangement and related interfaces.

Fig. 3 delineates different visible and underlying logical elements with the related signal flow regarding an embodiment of the provided UI applicable in connection with the present invention.

Fig. 4 represents a potential screen view of such UI.

Fig. 5 is a flow diagram of an embodiment of a method according to the present invention.

Fig. 6 is a combined flow and block diagram representing the internals of an embodiment of the present invention and related data flow.

Fig. 7 illustrates one further use context and associated process steps for the embodiments of the present invention particularly relating to project and process environments.

DETAILED DESCRIPTION OF THE EMBODIMENTS

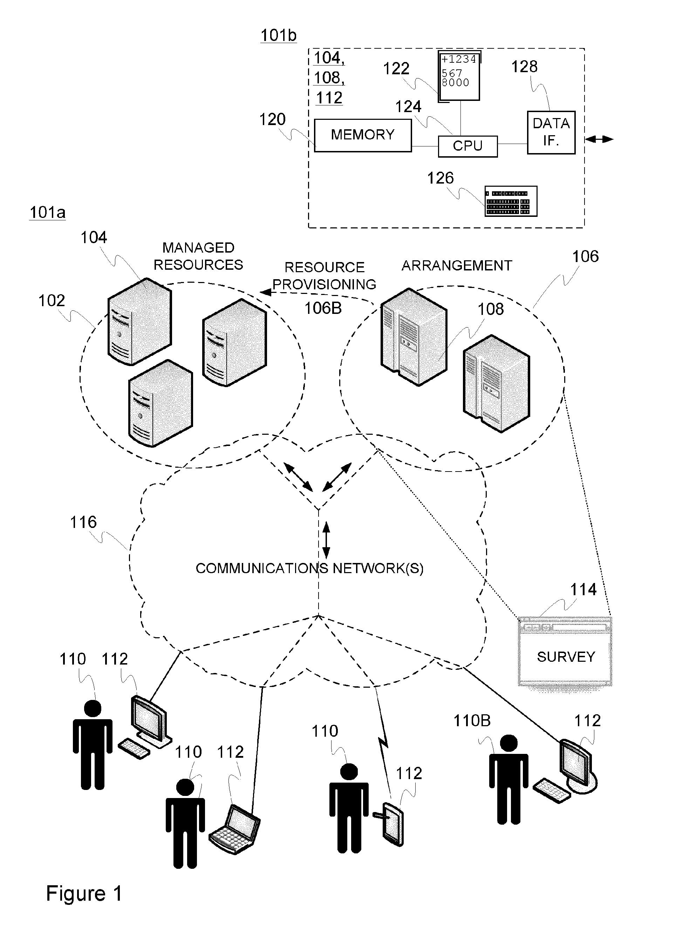

Fig. 1 shows, at 101a, a high-level sketch of a potential use scenario of an embodiment of arrangement 106 for resource management based on the utilization of recurring online survey 114 hosted by the arrangement. By hosting we refer herein to the receipt of the answers and execution of related analysis tasks, for example. The arrangement 106 may comprise an electronic device or a system of multiple electronic devices 108 such as at least functionally connected servers optionally residing in a cloud computing environment. The managed resources 102 may comprise a number of network (service) resources such as servers 104 and related communication infrastructure optionally also located in a cloud.

A plurality of respondents 110 is provided with a number of terminals 112 such as computers or mobile terminals, i.e. mobile computers, capable of communicating with the arrangement 106 via available communication path(s) such as communication network(s) 116, which may include both private and public networks. Technology-wise, the communication legs may be wired or wireless, e.g. wired Ethernet-based or cellular-based, respectively. As mentioned hereinbefore, the recurring online survey may be conducted using terminal-executed native client software, web application, hybrid application and/or dedicated web application among potential other feasible options.

In addition to natural persons acting as respondents 110 the scenario may further include other entities 110B that merely administrate the related infrastructure, such as the arrangement 106 and/or resources 102, or solely consume the analysis results provided by the arrangement 106, for example. Naturally the roles of the active entities may overlap and the respondents 110 preferably have at least limited access to the analysis results such as KPI determination or trend detection results. In some embodiments, the arrangement 106 and managed resources 102 may actually overlap as well. Resource provisioning 106B such as reallocation may be effectuated by means of manual labor as instructed by the arrangement 106 or at least partially automatically using an automated provisioning entity optionally integrated with the arrangement 106 and/or the managed resources 102 themselves.

At 101b, a coarse, more hardware-oriented, sketch of the illustrated device's 104, 108, 112 possible internals is provided by means of example only. The device may comprise at least one processor element 124 such as one or more microprocessors, micro-controllers, DSP's (digital signal processor), programmable logic chips, etc. The processor 124 may be configured to execute the application code stored in a memory 120, which may imply processing instructions and data relative to a number of application(s) associated with the present invention. The memory 120 may be divided between one or more physical memory chips or other memory elements. The memory 120 may further refer to and include other storage media such as a preferably detachable memory card, a floppy disc, a CD-ROM, or a fixed storage medium such as a hard drive. The memory 120 may be non-volatile, e.g. ROM, and/or volatile, e.g. RAM, by nature.

A local UI may be provided and comprise a display 122, and/or a connector to an external display or a data projector, and keyboard/keypad 126 or other applicable control input means (e.g. touch screen or voice control input, or separate keys/buttons/knobs) configured so as to provide the user of the device with practicable data visualization and device control means. The UI may further include one or more loudspeakers and associated circuitry for sound output. In addition, the device comprises a data transfer entity or interface 128 including e.g. a wireless transceiver (e.g. GSM (Global System for Mobile Communications), UMTS (Universal Mobile Telecommunications System), WLAN (Wireless Local Area Network)) for communications with other devices and/or network infrastructure(s), and/or a wired data connectivity means (e.g. Ethernet interface) for the similar purposes. Questions of the survey may be transmitted and/or answers received via the data transfer entity, for example. It is clear to a skilled person that the device may in practice comprise numerous further functional and/or structural elements for providing various beneficial communication, processing, storage or other features, whereupon this disclosure is not to be construed as limiting the presence of potential additional elements in any manner.

Reverting to the foregoing, software functionalities for instructing the underlying hardware to carry out the various procedures suggested herein may be implemented as one or more software applications executed by the processor 124. This computer software (product) may be thus provided on a carrier medium such as a memory card, a memory stick, an optical disc (e.g. CD-ROM, DVD, Blu-ray ™), or some other memory carrier.

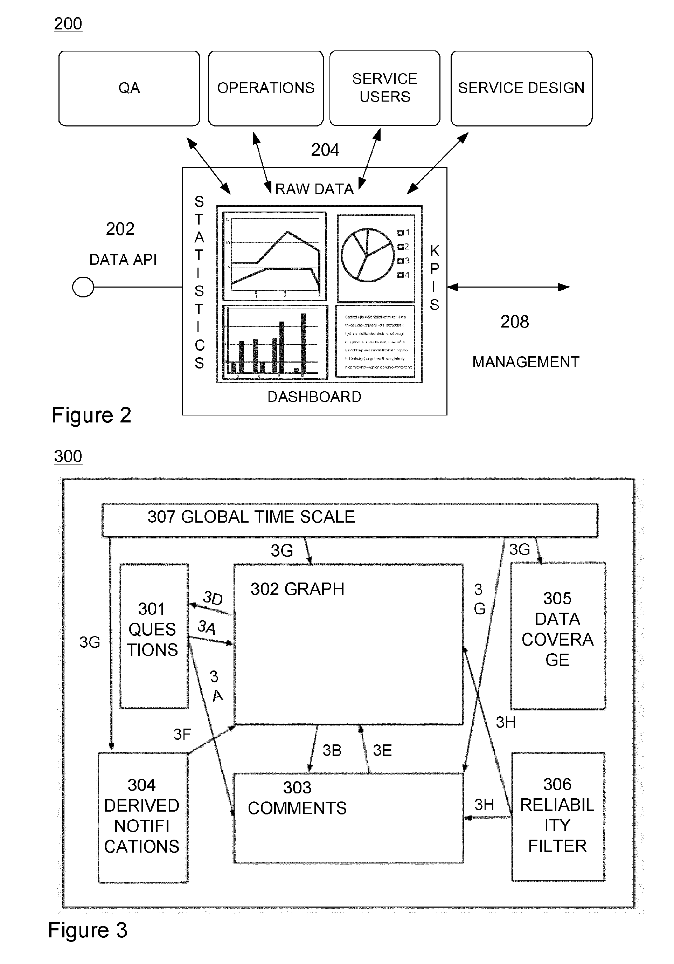

Fig. 2 is a conceptual representation of an embodiment 200 of the suggested arrangement and related interfaces. The arrangement is preferably provided with graphical UI, optionally web-based UI, which enables 208 different entities such as respondents, administrators and survey results/report consumers (e.g. management personnel responsible for the resources) to see survey questions, answer them, execute different analysis tasks on the data, inspect the analysis results including statistics and KPIs, etc. Different entities may be allocated with different rights regarding the availability of data and related analysis results or tools.

Raw data 204 for conducting the analysis such as determination of trend-setters (i.e. representative respondents) and obviously the trends themselves may indeed be obtained e.g. from resource users such as digital service (end-)users, service designers (R&D staff), administrators/operators, and e.g. quality assurance (QA) people as indicated in the figure. Data API(s) 202 may be included for dealing with various external systems and services for obtaining e.g. technical measurement data or survey answers given via intermediate systems (and not directly via the proprietary UI). Yet, data API(s) 202 may be utilized for outputting data such as survey results to external systems and other entities in predetermined format(s). The external systems that are communicated with may include e.g. social media sites for obtaining survey answers and/or feedback e.g. for social amplification.

Different users of the arrangement such as the survey respondents (often end-users of the managed resources) and the actual operators and/or owners of the resources may consume the quantitative and qualitative data through the provided UI or UIs in the case of multiple UIs offered to utilize the arrangement and related data. Post-processed data may be visualized as histograms, bar charts, stacked bar charts, plots, and other visualization methods. The data may be post-processed collectively substantially in real-time giving the different user groups the most up-to-date views to the status of the service.

Fig. 3 delineates at 300 different visible and underlying logical elements with the related signal flow regarding an embodiment of the provided UI applicable in connection with the present invention. All the shown elements do not have to be included in each embodiment of the present invention, or the realization thereof does not have to follow the exemplary descriptions set forth below as being understood by persons skilled in the art. The UI preferably carries out visualization and interaction of the questions, other survey data, comments and e.g. statistically generated notifications to facilitate easy and fast adoption of valuable information. Further, the UI preferably correlates visually quantitative and qualitative data, and motivates if not forces the respondent to provide valuable input as much as possible. Operators of the arrangement may use case specifically determine what access rights different users such as respondents may have to the data, hence all of the elements or functionality from the elements may not be visible to all users. The layout of the UI elements is not fixed but rather configurable.

Questions element 301 provides the predefined questions to the respondents. The questions may adopt multiple forms, such as continuous scale, Likert scale and multiple choice. The Questions 301 preferably provide a possibility for optional comments that can be either shared with everybody or directed only to entities with necessary rights to inspect those. The respondents may preferably update the answers at any time when their opinion of the matter evolves. Alternatively, predetermined answer times or periods may be utilized. When answering the question the UI provides a hint what was the respondent's last answer to the same or similar question. The respondent is thus motivated to think harder by hinting their previous answers. It may be case-specifically determined which is the minimum tolerable frequency to provide the answers. Optionally, and for both motivation and data coverage reasons, if the respondent has not answered the questions during a defined period of time he/she may be forced to enter all the answers before the other elements become visible. When a question is being processed, the Graph 302 and Comments 303 elements may be focused to the question and corresponding point of time (see signals 3A).

The functionality of the Questions element 301 or of other elements reviewed hereinafter may be implemented utilizing different UIs of the arrangement instead or in addition to an element in the dashboard of e.g. native client application. For example, it may be embedded in a cloud service UI enabling the cloud service operator to leverage the system, or it may be integrated to a web browser as a plugin.

Graph element 302 contains graphical representation of the data. There can be multiple Graph elements 302 in the user interface. The Graph element 302 may contain data from the raw questions and/or derived key performance indicators (KPIs). The Graph element 302 provides interaction to select the question or the KPI to be shown. Accompanied with the graph the element visualizes the amount of comments in time scale for the whole system and/or for the specific question. When certain point is selected from the time scale the Comments element 303 preferably gets automatically focused (3B) to that point of time for the particular question.

In addition, Graph element 302 preferably provides user-selectable options e.g. to show reference graphs from reference projects or from a subset of the users derived statistically, (e.g., the most reliable respondents). Graph element may further provide filters that specify the data to be shown relative to all or just some respondent groups, for instance. The associated time scale may be adjusted via the UI. When selecting a particular question graph the Question element 301 may be focused to that question to give the user more input to analyze his/her view compared to the view by other users (3D).

Comments element 303 is responsible for indicating the shared comments optionally based on predetermined privacy settings. The element 303 may include different filters, sorting and search methods for the comments, such as most liked, most recent and most commented comments. The users can indicate their support for the comment and/or they can enter their own additional comments, which may be utilized in social amplification as described in more detail hereinafter. When a comment is selected from the Comments 303 the Graph element 302 may be correspondingly focused to the right source data and time and the may be visually indicated in the Graph element (3E).

Derived notifications element 304 preferably contains initially automatically and statistically generated notification items that may be relevant to the project in positive or negative sense. The arrangement users are able to post-process the relevance of the notifications either by liking or disliking them, which may further be exploited by means of social amplification. The derived notifications are advantageously automatically ordered by statistical relevance and user post-processing input which makes it easy and fast to identify what are the most significant notifications that may require actions. The derived notifications may be discussed in notification specific comments. When selecting a derived notification the Graph element 302 may get focused to the corresponding source data (3F).

Data coverage element 305 may show the coverage of the input data and gives indications how reliable the data really is. Data coverage data may be in practical UI implementations integrated visually to the Graph element 302, or it can be an element of its own.

Reliability filter element 306 includes UI control which the UI user can use to filter data input to those respondents, i.e. representative respondents, who have proven to be able to reliably predict short and long term trends. This provides new and easy way to filter most valuable data in Graph 302 and Comments 303 elements for further analysis and actions (3H). Reliability filter and related UI element 306 provides a clever solution to a technical problem which provides fast and easy way to categorize survey input e.g., to most valuable one for solving technical challenges related to network and service management, for example. Reliability filter functionality may be in some embodiments included in the Graph element 302 and it can contain several dynamic parameters to (re-)tune the Reliability filter semantics.

Global time scale element 307 may be utilized to set the time scale to be examined for the other elements (3G). The time scale element 307 may include information of the amount of the qualitative data available in the system which makes it easy for the arrangement user to identify e.g. the times where there is much active discussion and potential valuable qualitative data. Optionally, the time scale may be adjusted in other elements directly.

Generally, the arrangement may be considered to incorporate a survey component such as software component for presenting the survey question(s) to a respondent and recording the answers. The answers may be given on a predetermined scale, visualized e.g. as a 'slider' or equivalent UI element, for instance. And as mentioned above, in relation to each question the component may be configured to display the latest answer given by the same respondent as a default value, i.e. default new answer. If the respondent doesn't alter the latest answer, the previous answer is considered to reflect the current opinion of the respondent. The component may further indicate that the respondent hasn't yet altered his answer by showing the previous value, for example, in grayscale. If the respondent has not answered the survey for a prolonged period of time, the software component may encourage the respondent to re-evaluation validity of old answers by displaying additional prompts, sending encouraging messages such as e-mail reminders, etc.

Concerning reporting the analysis results, a reporting component that displays the aggregated results of the survey, may be implemented by the arrangement. The reporting component may take advantage of the increased frequency and finer granularity of responses in several ways. For instance, changes to even small subset of survey questions can be confidently reported and visualized in the user interface in real-time as each of the immediate changes is basically a direct result of a user action. Further, the arrangement configured to process the survey answers can safely assume there's no noise or need for rough category matching between the subsequent responses of the same respondent (as each alteration in the answers is intentional, and conversely each non-alteration is exact).

The arrangement is advantageously configured to detect and highlight emerging trends and preferably also other weak signals by either displaying them separately in the UI of the reporting component or by altering their rank if they are in a mix with other items. In either case, the importance or priority of such an emerging trend or weak signal may be adjusted by applying e.g. one or more of the following criteria:

1) Recentness of the data; Answering & updating already-given answers may be in some embodiments allowed at any time, a free-scale answer method may be exploited, and/or the most recent historical (personal) answer may be hinted to the respondent; the most recent data reflects the respondents' actual opinions. For example, "Confidence in service availability has slightly increased from last week."

2) Coverage within respondent category; If respondents are assigned to multiple categories (e.g., based on the function they work in), correlation within the category can be used to highlight weak signals. Example: "80% of the testers express decreased engagement with project goals compared to yesterday."

3) Social amplification; If the system supports voting for perceivably important trends & signals, the number of such votes can be used as a highlighting factor.

4) Amplification of the representative respondent, or 'trend-setter', opinions; As the arrangement preferably supports identifying these thought-leaders, such a status of an individual respondent can be used as a highlighting factor. See the last two-pager.

In various embodiments of the present invention social amplification of machine-detected trends may be applied in cultivating the survey responses. Social amplification may be realized by e.g. interactive UI functionalities that enable the respondents and optionally other parties to rate or otherwise identify, characterize or qualify important questions, answers, analysis results, etc. For example, the UI such as dashboard view showing the results may display "like" and/or "dislike" -styled buttons or other icons next to the shown items - optionally together with a comment field that may be of pop-up type. The arrangement may utilize the number of like/dislike or other vote inputs to rank the results also based on their perceived importance, and also to affect other calculations such as identifying representative respondents according to predetermined logic.

The arrangement may thus be configured to adjust the ranking of trends it identifies in response to the obtained subjective and social feedback. In addition, the arrangement may provide an opportunity to discuss such trends by allowing respondents potentially other entities to leave comments via the UI to be displayed optionally in real- time fashion.

As one inherent feature of the suggested arrangement it provides an opportunity to identify and display both aggregated statistics and statistically significant changes (trends and signals) based on the survey responses. To enable social amplification in this context, the aforesaid interactive UI functionality may be used to express subjective importance of e.g. a reported survey result value (e.g., average satisfaction of the managed service resources), a trend (e.g. declining satisfaction), or a signal (e.g., half of the participants have not responded this week). A predetermined UI element may be placed visually next to the reported value, trend, or signal. Optionally, to avoid visual clutter, the UI element may be hidden unless e.g. a mouse cursor is placed over the corresponding value element. The visual appearance of the UI element may be similar to iconography used in social media, for example, "thumb up" or "thumb down".

To make interaction with the arrangement more natural, the type of the icon to display can be automatically selected based on whether the reported trend is positive or negative. For example, a trend indicating decreasing satisfaction may have a "thumb down" icon next to it, whereas a trend indicating increasing satisfaction would be paired with a "thumb up" icon.

When the interactive element is triggered (for example, "thumb up" button icon is selected), the arrangement is configured to record a one-point increase in the number of votes of the corresponding value, trend, or signal. The number of votes casted may be displayed in the UI together with the corresponding element.

Optionally, the arrangement may be configured to automatically monitor and discard subsequent attempts from the same user to vote on the same shown issue, such value, trend, or signal.

In addition to or instead of allowing casting simple votes for importance on a particular value, trend, or signal, the arrangement preferably allows the user to write at least a shortish free-text comment using natural language. The comments may be displayed in a dedicated view or location of the UI.

Additionally, one or few of the most recent comments may be displayed in the main UI view together with the corresponding value, trend, or signal.

The arrangement, e.g. analysis component thereof, may use the number of votes associated with a particular value, trend, or signal to:

> a) produce a sorted list of values, trends, or signals with highest number of votes - and thus potentially the highest subjective importance to the voters.
> b) adjust the relative ranking of a trend or a signal - for example, by calculating a combined importance score from the magnitude a signal and the number of votes it has received, and/or
> c) increase the weight of a signal when performing calculations to identify potential trend-setters and thought-leaders, i.e. representative individuals, from the respondents.

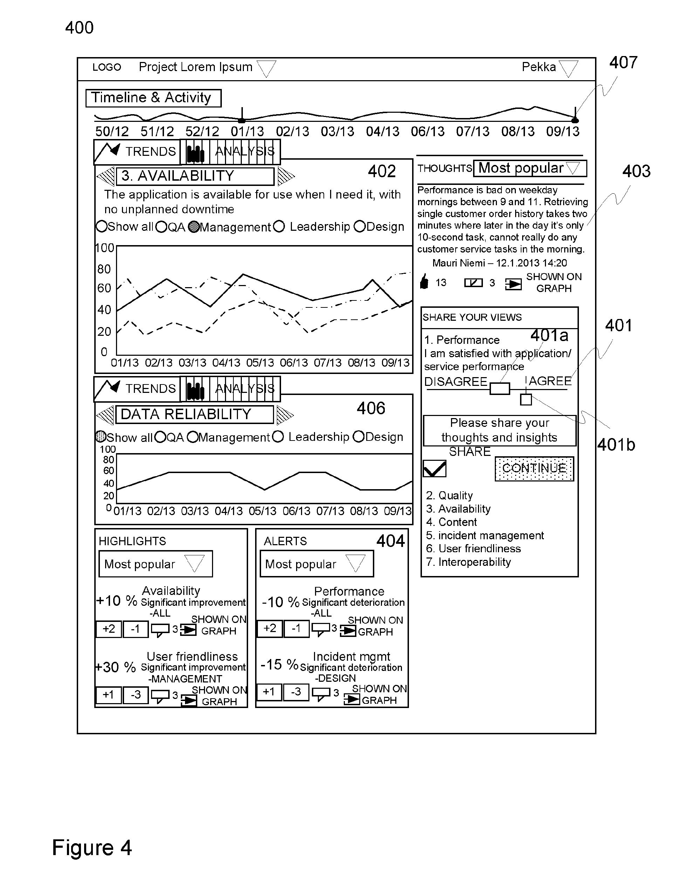

With reference to Figure 4, an example of a screen view 400 of the interactive UI is shown with some aforementioned aspects visualized to further provide insight to the internals of the present invention and related feasible UI. Via items 402 and 406, graph, data coverage and reliability related aspects are indicated according to user selection. Item 403 discloses various comments provided by the users incorporating both free-form natural language comments and discrete 'thumbs up or down' type votes qualifying the managed resources, in the shown example being a network service, essentially a web shop. Item 401 indicates the questions asked from the respondent during a survey. A slider type of response mechanism 401a is shown, wherein the initial position of the slider 401a preferably indicates the previous response of the respondent to the same question. Alternatively, a dedicated pointer 401b, e.g. grayed slider or pointer of different type, to visualize the previous response could be provided in addition to the active slider. Item 404 refers to the derived notifications, e.g. alerts in case of sudden negative changes, indicative of resource management status and related trends detected. Item 407 visualizes the time scale and the particular period of time analyzed in the other parts of the UI.

In various embodiments of the present invention, trend recognition plays important role as described herein. The respondents of a survey usually have different insight on both the visible and hidden variables that reflect the status of the surveyed items such as managed resources (or e.g. commitment and reachability of the goals if a project or process is surveyed). The level and scope of insight is difficult, if not impossible, to model thoroughly as it is affected by the complex combination of respondent's position in the organization, personality traits, communication network, interest and visibility to the relevant data, and tasks at hand. Nonetheless, identifying individuals who tend to detect indicative changes (such as sudden decrease in perceived user satisfaction of a service) in advance compared to the general population is potentially valuable but not a trivial task on the basis of the survey data.

To recognize such representative respondents, the arrangement may be configured to calculate correlations or simulate causalities between individual responses and later trends observed among a wider population. Consequently, the arrangement may be configured to identify and rank any individuals whose responses have on average and based on the historical data higher probability of predicting the reference group's (where the individual potentially belongs to) or other larger population's behavior.

Such an identification process may include a procedure to calculate, utilizing basically any applicable method, statistically significant changes in responses to single or multiple questions over subsequent time intervals (e.g., days, weeks, or project iterations) to record change signals.

The identification process may include an evaluation method that calculates correlation score of an individual respondent's responses (or the change in an individual's responses corresponding to the change signal) given a chosen time delta prior to a change signal and records them. Regarding actual implementation, the exact procedure to calculate a 'correlation score' may be chosen from a variety of correlation and covariance determination methods as understood by the persons skilled in the art.

Additionally or alternatively a simulation method may be utilized. It makes a hypothesis that an individual respondent's responses given a chosen time delta in advance predict a change signal. By simulating success of such a hypothesis using the recorded responses (or the change in an individual's responses corresponding to the change signal) against the recorded change signals, the method produces a simulation-based correlation score.

In general, the time delta between the individual response and the change signal in the larger population to be observed may be initially chosen based on an expert opinion (e.g. a day before, a week before, a month before, or one survey round before).

Additionally, the arrangement may be configured to calculate correlation scores for a larger set of time delta values, and apply any feasible data mining technique to detect potentially meaningful time delta values.

As the result of evaluation and/or simulation, the arrangement has calculated a set of correlation scores for each chosen respondent-time delta combination.

Further, the identification procedure may include a sorting method that ranks the respondents in decreasing order by the per-respondent correlation score values. The list may be pruned by selecting a top percentile (for example, 10%) of the respondents or the respondents above a chosen threshold average score. The representative respondents have been thereby found.

Yet, the evaluation and/or simulation procedures may be arranged to apply social amplification (such as a relevance value manually assigned to a change signal, or the number of votes casted on it) as a weight factor to further refine the rank of the most potential respondents.

Yet, to increase topical focus and to decrease noise in results, the same method can be applied only to a subset of survey questions to identify representative respondents, or potential 'trend-setters' and 'thought-leaders', in the context of those questions. For example, if a subset of questions address confidence in a monitored temporal aspect such as (project) schedule, analyzing data only based on the corresponding change signals may result in identifying individuals with higher sensitivity to the early signs of a schedule slip.

Below, mathematic representation of one applicable determination logic for identifying representative respondents is finally provided, i.e. we calculate the correlation of the individual's (or limited number of respondents') responses leading the later average responses in a wider group.

> $T_i$ scoring value
> X answers of an individual to calculate the score for (*or arithmetic mean of the answers of a group to calculate the score for*)
> $\overline{Y}$ arithmetic mean of the answers of the reference group
> d time shift
> p correlation coefficient
> (*for example, Spearman's rank correlation coefficient*)

Reference group values are temporally aligned to include the time shift:

$$X_D = \begin{bmatrix} X_1 & X_2 & X_3 & \dots & X_{n-d-1} & X_{n-d} \end{bmatrix}$$

$$\overline{Y}_D = \begin{bmatrix} \overline{Y}_d & \overline{Y}_{d+1} & \overline{Y}_{d+2} & \dots & \overline{Y}_{n-1} & \overline{Y}_n \end{bmatrix}$$

The correlation coefficient may be then determined as:

$$T_i = \rho_{X_D, \overline{Y}_D} = corr(X_D, \overline{Y}_D).$$

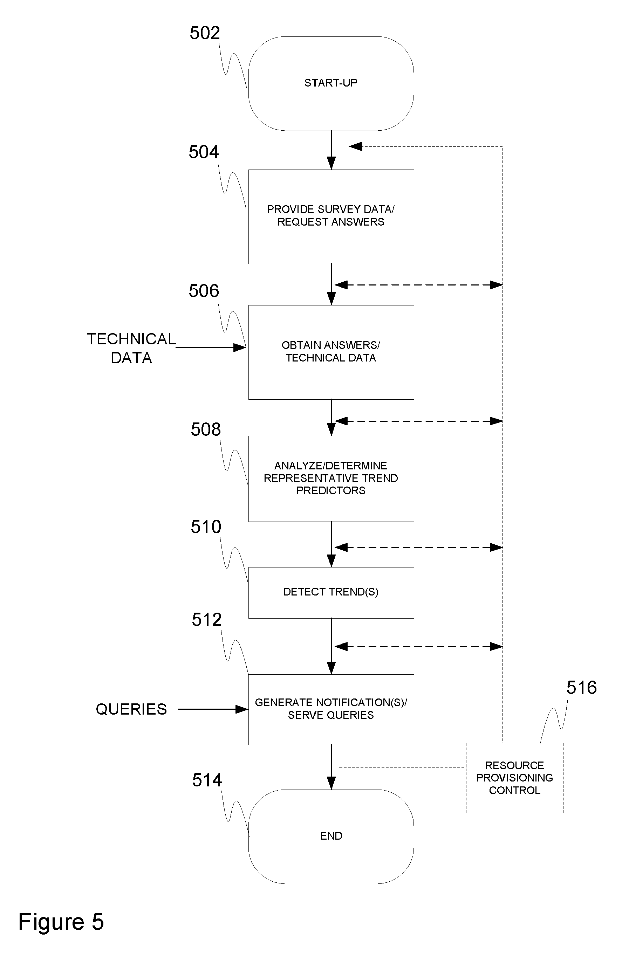

Fig. 5 is a flow diagram of an embodiment of a method according to the present invention to be performed by an electronic arrangement including at least one electronic apparatus such as a server operable in and accessible through a communication network. Upon start-up, at 502 initial actions enabling the execution of the further method steps are performed, i.e. the arrangement and terminals communicating therewith are provided with the necessary software by the parties concerned.

At 504, transmitting data identifying a recurring online survey comprising a number of questions regarding the managed resources takes place as described in more detail hereinbefore.

Data is transmitted to a plurality of respondents each of which being associated with at least one terminal device reachable via at least one communication network whereto the arrangement has been connected by the data transfer interface thereof, e.g. the Internet or selected intranet(s). Naturally a number of further networks such as cellular network may reside between the arrangement and each respondent depending on the use scenario. The transmitted data may include in addition to questions further data such as data defining at least part of the UI of the arrangement, optionally web data. Yet, the data may include available answer options in the case of closed-ended questions. Each respondent may have and be thus associated with his/her personal terminal device such as mobile terminal or e.g. desktop or laptop computer. Alternatively, a shared terminal or multi-user computer may be utilized by several respondents to answer the survey. The terminals may be configured to execute e.g. web browser (with optional survey-enabling add-on(s)) or native application to provide the respondents with the survey questions and corresponding answering opportunity.

The online survey is customized to each respondent relative to at least one question through indication of a 'hint', i.e. previous answer by the user to a similar question already answered during a previous round of the survey so as to enable the respondent recall the previous answer and scale the current answer consistently.

At 506, data indicative of answers to the questions of the survey is received. An embodiment of the arrangement UI as reviewed hereinbefore may be exploited to collect the answers, for example, or the answers may be provided through external system functionally connected to the arrangement. The data may include the answers as such or some coded but decodable indication of the answers (e.g. hash), for example.

The answers may be stored incrementally and optionally survey round-specifically, each round being associated with a certain time interval or other predetermined survey stage during which the answers were given and/or to which the answers relate. In some embodiments, also the survey itself may evolve over time, i.e. the questions may be dynamically altered e.g. in response to the analysis of answers received relative to the previous questions.

Further, technical data such as measurements and/or used control parameters (values) may be received regarding the managed resources to supplement the survey answers to facilitate data analysis such as trend determination and decisions upon necessary corrective actions. For example, answers indicative of increased service latency and technical data indicative of the number of average or maximum service accesses per reference period and of the amount of processing power available may collectively enable assuring the nature of the arising problem and coming up with feasible solution thereto.

At 508, the obtained raw data is processed and analyzed. For example, a number of representative respondents, i.e. 'trend predictors', are determined from said plurality according to the guidelines set forth herein.

At 510, trend(s) such as an emerging temporal trend is detected using any feasible statistical method based on the answers, wherein the answers of the representative respondents are advantageously given sole or at least more weight than the other respondents. The arrangement may be preferably controllable by the user, via the UI of the arrangement, so as to enable different weighting schemes to be used for trend detection and depiction.

At 512, notification signal(s), such as alarm notification, general status notification or trend notification signal, is generated based on the detected trend according to predetermined criteria to facilitate optimization of the managed resources. The signal may be targeted to a (human) user of the arrangement and/or automated technical recipient, such as a computer entity controlling resource provisioning, which the notification signal may trigger. The signal may be visualized via the UI of the arrangement for human users and/or realized as an e-mail or other predetermined message of optionally textual and/or graphical character (it may include graphical notation such as graph with textual explanation like curve depicting sudden decrease in user satisfaction regarding service accessibility and related text "Satisfaction dropped by 20% since last week!", for example).

Optionally, the signal includes an indication of corrective action to be taken regarding the notified matter. The indication may be based on predetermined logic hosted by the arrangement. For example, if the already aforementioned service latency turns out a problem, the logic may convert such input into an increase in the required computing power within the managed resources. The service provisioning entity may then allocate new server(s) from a cloud, for example. Alternatively, the receiving entity may bear such logic to take the necessary actions on the basis of the informative notifications.

At 516, resource provisioning control is effectuated based on the conducted analysis and notification(s). As explained above, the control may be executed by an entity included in the arrangement or by an external entity functionally connected thereto.

At 514, the method execution is ended.

The dotted loop-back arrows indicate the repetitive nature of the various method items based on e.g. new data received and control actions initiated by the users of the arrangement via the UI thereof to provide desired kind of analysis results for deliberation. The number and mutual order of method items may thus dynamically vary even in connection with a single embodiment of the present invention.

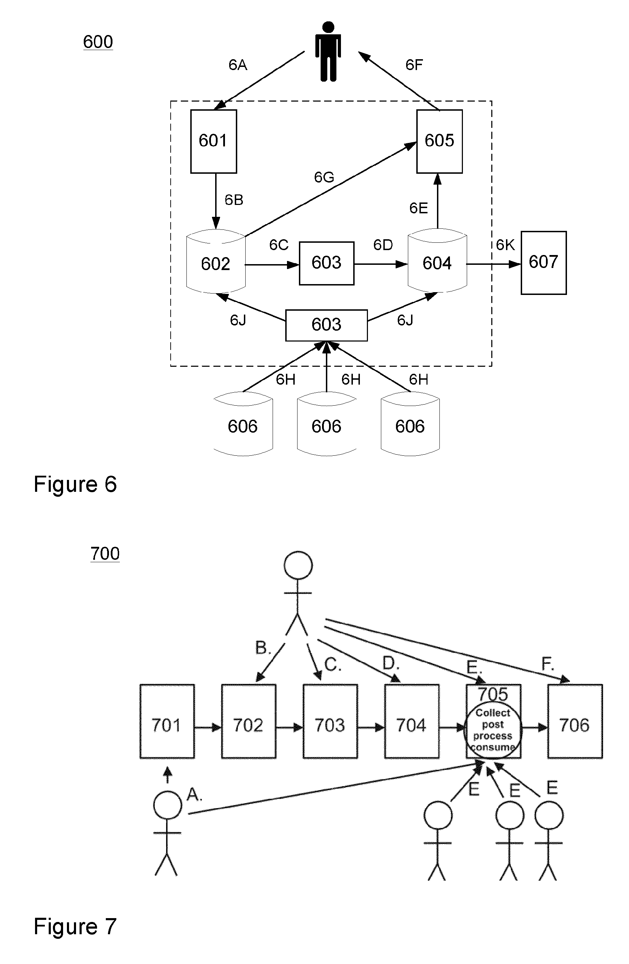

Fig. 6 is a combined flow and block diagram representing the internals of an embodiment 600 of the present invention and related data flow. The representation especially deals with dynamic prioritization, allocation and reallocation of managed resources such as computing resources based on perceived end user experience combined optionally with technical network and/or service management metrics.

The arrangement combines information regarding the service from end users and optionally data originated from external data sources. The external data sources may include a network manager, network management system, service management system or any other entity providing relevant technical data on hardware, network or service level.

At 6A, the end user answers the specific questions through data collection UI 601 various examples of which have been described hereinearlier. The questions preferably include both quantitative and qualitative aspects. Questions could be like "How satisfied you are with service X?", "How important is service X for you?" or "Are you happy with the service X performance?". One example of such service could be a cloud based HR (human resources) management system. The questions are advantageously answered at a minimum frequency defined by the heartbeat defined by the arrangement which guarantees wide data coverage. The data collection UI 601 can be implemented in different ways:

i. The data collection UI may be embedded in a cloud service UI enabling the cloud service operator to leverage the system.

ii. The data collection UI 601 can be integrated to a web browser as a plugin enabling seamless data collection from many web based services and deploying the system e.g., in large intranet environment

iii. The data collection UI 601 can be integrated to dashboard UI 605 instead or in addition to options i and ii enabling easy data updates in conjunction with the data analysis. Dashboard UI 605 is utilized as an explicit example of feasible UI hereinafter.

At 6B, the data is stored to a database 602 in raw format. The data storage format advantageously supports different question types such as continuous scale, Likert and multiple choice questions. The data storage format is selected so as to enable fast data insertion of the raw data. Considering the above merely exemplary questions, the questions are answered with a continuous scale (e.g., 1-100 scale) combined with optional comments. The optional comments are the qualitative part of the collected raw data.

At 6C, the quantitative raw data is continuously post-processed 603 to format optimized for fast queries by the dashboard UI 605. The processing contains operations like summarizing data in different dimensions like time and scope. The qualitative data is consumed directly from the raw data database 602 or it may be post-processed to analyze and compress large comment mass to consumable information items. The post-processing of qualitative data preferably incorporates statistical natural language processing with stochastic, probabilistic and statistical methods. Post-processor applies statistical algorithms to quantitative input data, including but not limited to calculating averages, standard deviation, correlation, and/or threshold-filtering on one or multiple data-sets grouped by answers, user groups, timestamps of answers, or combination thereof. In the examples mentioned above, the end users views about the service could be summarized to day and week level and grouped to different user groups (like HR function, line managers and business experts.

At 6D, the post-processed data is stored to a database optimized for the dashboard UI 605 queries which enables fast reaction time for the queries for the quantitative data in the user interface. The database 604 may be indexed based on e.g. dashboard UI 605 query profiles to ensure high performance for all potential queries from the end users.

At 6E, the dashboard UI application queries implement the end user needs for the post-processed data he/she wants to see via the UI. The arrangement may provide automatic, e.g. positive or negative type in terms of resource management success or status, notifications to the users. The rules for the notifications may be stored in the database 604. The arrangement generated notifications are based on different statistical methods which could include, but are not limited to:

- pre-defined threshold
- correlation of the direction of a change (positive or negative) between potential statistically reliable respondent and general population with time-delta (1 day, 1 week, 1 project step in advance)
- correlation of the magnitude of a change between potential "trend-setter" (representative user) and general population with time-delta (1 day, 1 week, 1 project step in advance)
- stochastic, probabilistic or statistical methods for processing the qualitative data.

At 6F, the user of dashboard UI 605 consumes the quantitative and qualitative data through the UI. Post-processed data may be visualized as histograms, bar charts, stacked bar charts, plots, and other visualization methods. The data may be post-processed collectively in real time giving the different user groups the most up-to-date view to the status of the service. In the example the different user groups, like HR, line managers, experts, view and post process the data manually by utilizing social amplification techniques and responding to most relevant comments.

Different user groups may be assigned characterizing privileges, which allows for example some users to filter the data based on the estimated reliability of the respondents, with reference to the afore-explained determination of representative respondents. The reliability of the respondents may be identified using a sliding time window based analysis as suggested hereinbefore. This analysis may be done per user (respondent) or user group basis, and the correlation between the user's indicated trend in the beginning of the time window and the larger sample trend at the end of the time window is recorded. Each analyzed user may be awarded a weight score based on the correlation, and the sliding time window is moved later and the same analysis performed again. The end result may be considered as a 'trend-setter score' for the user during the sampling period.

For example, a network operations engineer may compare end user perception between different services and with the same service in the history. The operations engineer may want to optimize the network resource allocation based on the end user perceived quality, performance and satisfaction of the service. The end user perceived data may be correlated with hardware, network or service oriented measurement data e.g. in two ways:

  i. The operations engineer can correlate the end user perception with the HW (hardware), network or service based measurements manually with another network manager, network management system, performance profiling service, or service management system.

  ii. The operations engineer can correlate the end user perception with the HW, network or service based measurements from another network manager, network management system or service management system at least semi-automatically if the data collection 606H and pre-processing 606J are implemented from the external system.

Based on end user perceived data and HW, network or service based measurements the operations engineer may execute optimized decisions to configure the network's computing resources to get the best out of available computing resources.

At 6G, the dashboard UI 605 queries the qualitative data directly from the raw data storage 602 based on e.g. timestamps and keys to quantitative data items.

At 6H, external data sources 606 may be added to bring HW, network or service based measurements to the arrangement in addition to end user perception based data. For example such measurement data could include end user response time (service level measurement), CPU utilization, memory utilization and network utilization (network & HW level measurement).

At 6J, the data from external data sources is pre-processed to a format that is compatible with the arrangement's data model which enables correlation of the data with the end-user originated data. Depending on the nature of the external data it may be inserted to the raw data storage 602 or the post-processed data storage 604. At 6K, the arrangement may include an interface to an automatic service provisioning system 607 which enables implementing automatic correlation between end user perception based data and HW, network or service based measurements, and deciding automatically according to predetermined logic the optimal change for the service provisioning parameters.

Figure 7 depicts one further use context and associated process steps for the embodiments of the present invention particularly relating to project and process environments and e.g. collaboration model to expert project environments and process improvement initiatives utilizing social amplification.

Namely, the present invention may also be utilized as a collaborative process model for harvesting other than visible fact based data. In these embodiments the invention can focus in making invisible and feelings based data visible to the leadership. The invention used as collaboration model is beneficial because it implements fast and continuous co-operation loop for the functional stakeholder groups around common business or process. The invention helps making invisible facts visible in expert organizations where there exists some level of predictability but generic rules are missing how things typically work out. Common to these environments is the challenge of decision making under uncertainty, and all processes that bring more structure and transparency to the data available are valuable. Examples of such environments with partial predictability are:

• Software engineering environment where project success rate is often poor and all the expertise from the experts is not utilized for high-level decision making.

• Medical projects where there is clear correlation and predictability between different issues but every case may be different and expertise from different subject matter experts may be valuable.

• Research projects where part of the dynamics of the system to be developed is known and research may benefit from larger expert collaboration.

In some other embodiments of the present invention the proposed solution may be utilized as a cooperation model and data filtering mechanism in chaotic and unpredictable environments. The invention contributes to making the invisible data and feelings based data visible for the leadership. Examples of these chaotic environments and associated use of the present invention could include:

• Solving difficult business issues in complex organizations with conflicting views. The invention may be used as a tool to make the silent and or feelings based data visible and actionable.

• Political parties trying to reach joint decision with conflicting views. The invention is used as collaboration tool e.g., in defining next year's budget focus areas.

• Leadership team trying to find the best business decision when little data is available and there is a need to quantify invisible and feelings based data. The invention is used as collaboration tool e.g., in a strategy project.

• Conducting a large change project in an enterprise where visibility to the people's thoughts continuously is valuable. The invention may be utilized for making the peoples change curve phase visible to enable leadership targeting and level-ing the internal communications for maximum impact.

• Business network solving issues regarding common interests when there is value in quantifying different views and making the issues visible and manageable. The suggested solution may be used as a collaboration tool for active and continuous risk management regarding joint business interests.

- Process development or process optimization with the invention where all current process stakeholders are encaged to the process development activity to leverage their know-how in wide scale and achieve wide buy-in and feel of co-development

The applicable process model in both aforementioned embodiment types could be similar and generally follow the models already presented hereinbefore:

701. Objective definition. The business or process related issue and objective are formally described by entity A such as the leadership. The description typically contains a free form description of the business/process objective and a measurable target(s). For example, the objective could be: "Save IT project costs by avoiding typical project pitfalls in requirements management". A concrete target in a new project could be: "Save 20% from the budget without an impact to schedule or content".

702. Identification of stakeholders and associated groups. The objective owner analyzes B the objective and the objective stakeholders are identified by objective owner. Objective owner analyses the stakeholders' perspective to the objective. The stakeholders may be grouped into a plurality of functional groups according to their role in the context of the objective. For example, in IT project there may be functional groups like users, finance, operations, project management, software vendor(s), software designers, enterprise architects, technical architects and quality assurance.

703. Identification of key questions. The objective owner analyzes C the perspective & competence of different functional groups (ref. to 702). Based on the analysis the survey questions are defined for the functional groups. The questions may be the same or vary between functional groups and they can change according to the phase of the initiative. In different embodiments, the invention may offer ready predetermined question patterns to most common needs (use contexts) for selection. The objective owner may alternatively or additionally define also own questions, or modify the predetermined ones. When framing the questions, the question semantics and question ordering is preferably carefully considered by taking into account, in the execution logic of the arrangement, different psychological patterns and theories, such as anchoring, attribute substitution and priming theories. In the example IT project the draft questions could be generated based on research studies regarding relevant, e.g. top-10, failures of IT projects.

According to most studies misunderstandings on the project requirements is a top-3 pitfall. An example question could be "Do you understand the project objectives and requirements regarding you and your team?" Without the invention this is a typically a process related question to project management who typically is biased to answer because of time, bonus, political or other pressures. By means of the present invention the question could be asked from all relevant functional groups and the leadership might get greatly improved visibility to the key question directly linked to the project success.

704. Launching collaboration. The proposed system is set-up by the objective owner D configuring the defined functional groups, their privileges and selected/defined questions to the arrangement. Additionally when starting the collaboration the 'heartbeat' is defined to ensure that the data is updated periodically. In the IT project, for example,

- all functional groups and associated persons with their e-mail addresses from the company and potential external vendors are configured to the arrangement
- questions are configured including their parameters, validity periods and associated functional groups
- visibility parameters are defined to limit data access of some functional group members to e.g., aggregate (collective analysis) data only.

705. Execution of collaboration. The present invention executes the collaboration cycle E automatically preferably combining periodic and on-line data collection, post-processing and social collaboration benefits as reviewed hereinbefore.

Periodic data collection may include sending reminders to the functional group members when needed. Online raw data updates are possible basically at any time directly from the dashboard.

Data post-processing by social collaboration methods like social amplification may be done continuously by all functional groups.

Leadership may leverage the data continuously. The arrangement offers different methods and filters for data analysis as reviewed herein. Notification signals may be issued. Representative respondents may be determined and utilized e.g. in trend analysis.

706. Closing the project. When the objectives are met or the leadership decides to close the initiative the collaboration is stopped by the objective owner at F. The realization of the invention stores the collected data, and it can be used as reference data automatically by the arrangement in new initiatives. The scope of the present invention can be found in the following claims. Notwithstanding the various embodiments described hereinbefore in detail, a person skilled in the art will understand that different modifications may be introduced to the explicitly disclosed solutions without diverging from the fulcrum of the present invention as set forth in this text and defined by the independent claims.

For example, depending on the embodiment, as described hereinbefore the managed (system) resources may include machinery, computers, elements of network infrastructure, humans (workers etc.), project or process resources such as parameters, etc. In some embodiments, also anonymous respondents/answers may be allowed and optionally grouped into a respective group. Yet, various game-like aspects may be emphasized in the survey procedure to increase answering motivation among respondents by awarding the active respondents. The award may include an activation of a new analysis and/or data visualization feature in the UI of the arrangement as suggested earlier, or e.g. position or point increase in 'top respondents' listing or corresponding ranking. Still, the solution may contain database of respondents' personal information such as name, role and/or e-mail/terminal addressing information to enable targeting survey-related messaging such as transmission of questions or analysis results thereto and/or proper personal and group-wise association of the gathered answers. Further, the survey may include demographic questions and questions for identifying the respondent. Finally, in some embodiments the arrangement may omit transmitting the data identifying the survey relative to at least some respondents provided that such respondents receive the questions using some alternative delivery method, in extreme case ordinary snail mail.

**Claims**

1. An electronic arrangement (106, 108, 200, 300, 400, 600, 700) for managing system resources (102, 104) based on user perception, the arrangement comprising a processing entity (124) and a memory entity (120) for processing and storing data, respectively, and a data transfer entity (128, 202) for receiving and transmitting data, the arrangement being configured to host a recurring online survey (114) comprising multiple survey rounds and a number of questions (301, 401) regarding the managed resources and thereby to

   transmit, via the data transfer entity, data identifying the recurring, substantially continuous online survey to a plurality of user terminals (112) reachable via said communications network (116), each terminal being associated with a survey respondent (110), wherein the arrangement is configured to customize the survey (114) to each respondent relative to at least one question through indication (401a, 401b) of previous answer by the user to the same question already answered during a previous round of the survey so as to enable the respondent recall the previous answer and scale the current answer consistently,

receive, via the data transfer entity, data (204) indicative of answers to the questions of the survey provided by said plurality of respondents via the associated terminal devices (112),

determine, by the processing entity, on the basis of the indicated answers a number of representative respondents (306, 406) from said plurality, wherein the answers by the representative respondents matches best, according to predetermined criteria, with the temporally later given answers of larger population of the respondents,

detect, by the processing entity, an emerging temporal trend based on the answers, wherein the answers of the representative respondents are given sole or at least more weight than the other respondents, and

generate a notification signal (106B, 304, 404) based on the detected trend according to predetermined criteria to enable optimization of the managed resources in the light of the trend.

2. The arrangement of claim 1, configured to enable a respondent to revise, via a user interface of the arrangement, an answer already given during the ongoing survey round substantially at any time later during the same survey round.

3. The arrangement of any preceding claim, configured to control a user interface (200, 300, 400), optionally a web-based user interface, for providing access to the received data or processed data derived utilizing the received data and to output the generated notification signal (404) via the user interface.

4. The arrangement of any preceding claim, comprising a resource provisioning entity configured to allocate or reallocate the managed resources based on the detected trend (106B, 607) and optionally triggered by the notification signal.

5. The arrangement of claim 4, configured to receive technical data, optionally technical measurement or operation parameters data, regarding the managed resources, and to determine according to predetermined logic change to be made in the allocation of managed resources, optionally via adjusting the operation parameters, responsive to the detected trend and said technical data.

6. The arrangement of any preceding claim, configured to transmit said data identifying the survey to the respondents and optionally receiving said data indicative of answers from the respondents via a web-based user interface (200, 300, 400) accessible by the terminal devices, wherein the arrangement is further optionally configured to transmit a URL (Universal Resource Indicator) of a web application hosting the survey to the respondents.

7. The arrangement of any preceding claim, configured to control a graphical user interface (200, 300, 400) for answering the survey such that the indication of previous answer to a question includes a visually distinguishable pointer (401a, 401b) shown on an answer scale (401), wherein optionally two pointers (401a, 401b) are shown, the other (401a) then being indicative of current selection of a new answer to the survey question to be given.

8. The arrangement of any preceding claim, configured to calculate a predetermined indication of correlation between the answers of a respondent and the answers of the larger population to determine the representative respondents, wherein calculating the indication of correlation optionally includes determining Spearman's rank correlation coefficient.

9. The arrangement of any preceding claim, configured to determine or rank the representative respondents or detected trends utilizing social amplification (303, 403), wherein the arrangement is optionally configured to control a user interface (200, 300, 400), optionally web-based user interface, for providing access to the received data or processed data derived utilizing the received data, to receive user feedback (303, 403) via the user interface, optionally free-form comments and/or discrete votes indicative of like or dislike, regarding the received or processed data and to utilize such feedback in the determination or ranking of the representative respondents or detected trends.

10. The arrangement of any preceding claim, configured to subject free-form answers or comments received from the respondents to a predetermined language processing technique incorporating sentiment analysis and preferably utilize the results in determining or ranking the representative respondents or detected trends.

11. The arrangement of any preceding claim, comprising a plurality of predetermined question patterns for different use scenarios in the context of recurring surveys, where the questions of the patterns are user-alterable.

12. The arrangement of any preceding claim, configured to control a user interface (200, 300, 400), optionally web-based user interface, for providing access to the received data or processed data derived utilizing the received data, further configured to adapt the user interface to a respondent based on the respondent's activity in answering the survey, optionally said adaptation including activating or deactivating one or more features in the user interface.

13. A method for managing system resources to be performed by an electronic arrangement operable in a communications network, comprising
transmitting digital data identifying a recurring online survey comprising multiple survey rounds and a number of questions regarding the managed system resources to a plurality of terminal devices reachable via said network, each terminal device being associated with a survey respondent, wherein the online survey is customized to each respondent relative to at least one question through indication of previous answer by the user to the same question already answered during a previous round of the survey so as to enable the respondent recall the previous answer and scale the current answer consistently (504),
receiving digital data indicative of answers to the questions of the survey provided by said plurality of respondents via the associated terminal devices (506),
determining on the basis of the indicated answers a number of representative respondents from said plurality, wherein the answers by the representative respondents matches best, according to predetermined criteria, with the temporally later given answers of larger population of the respondents (508),
detecting an emerging temporal trend based on the answers, wherein the answers of the representative respondents are given sole or at least more weight than the other respondents (510), and
generating a notification signal based on the detected trend according to predetermined criteria to enable optimization of the managed system resources (512, 516) in the light of the trend.

14. A computer program, comprising code means adapted, when run on a computer device such as a server to execute the method items of claim 13.

15. A carrier medium comprising the computer program of claim 14.

Figure 1

200

| QA | OPERATIONS | SERVICE USERS | SERVICE DESIGN |

**204**

RAW DATA

**202**

DATA API

S T A T I S T I C S

**KPIS**

**208**

MANAGEMENT

DASHBOARD

## Figure 2

300

**307 GLOBAL TIME SCALE**

3G

3G

**302 GRAPH**

3D

3A

**301 QUESTIONS**

3A

3G

3 A

**305 DATA COVERAGE**

3 G

3H

3F

3B

3E

**304 DERIVED NOTIFICATIONS**

**303 COMMENTS**

3H

**306 RELIABILITY FILTER**

3H

## Figure 3

400

407

LOGO   Project Lorem Ipsum ▽                                    Pekka ▽

Timeline & Activity

50/12  51/12  52/12  01/13  02/13  03/13  04/13  06/13  07/13  08/13  09/13

/◀ TRENDS [▮▮] ANALYSIS

◀ 3. AVAILABILITY ▶                            402

The application is available for use when I need it, with no unplanned downtime

○Show all ○QA ◉Management ○ Leadership ○Design

100
80
60
40
20
0
   01/13 02/13 03/13 04/13 05/13 06/13 07/13 08/13 09/13

/◀ TRENDS [▮▮] ANALYSIS

◀ DATA RELIABILITY ▶                           406

◉Show all ○QA ○Management ○ Leadership ○Design
100
80
60
40
20
0 01/13 02/13 03/13 04/13 05/13 06/13 07/13 08/13 09/13

THOUGHTS [Most popular ▽]                         403

Performance is bad on weekday mornings between 9 and 11. Retrieving single customer order history takes two minutes where later in the day it's only 10-second task, cannot really do any customer service tasks in the morning.

Mauri Niemi – 12.1.2013 14:20

👍 13   [▨] 3   ▶ SHOWN ON GRAPH

SHARE YOUR VIEWS                                 401

1. Performance            401a
I am satisfied with application/ service performance
DISAGREE ━━▭━━ I AGREE
                    ☐

Please share your thoughts and insights
SHARE
☑                    [CONTINUE]               401b

2. Quality
3. Availability
4. Content
5. incident management
6. User friendliness
7. Interoperability

HIGHLIGHTS

Most popular ▽

Availability
+10 % Significant improvement
-ALL
                SHOWN ON
[+2] [-1] [🗩]3 ▶ GRAPH

User friendliness
+30 % Significant improvement
-MANAGEMENT
                SHOWN ON
[+1] [-3] [🗩]3 ▶ GRAPH

ALERTS                    404

Most popular ▽

Performance
-10 % Significant deterioration
-ALL
                SHOWN ON
[+2] [-1] [🗩]3 ▶ GRAPH

Incident mgmt
-15 % Significant deterioration
-DESIGN
                SHOWN ON
[+1] [-3] [🗩]3 ▶ GRAPH

Figure 4

502 START-UP

504 PROVIDE SURVEY DATA/
REQUEST ANSWERS

TECHNICAL DATA

506 OBTAIN ANSWERS/
TECHNICAL DATA

508 ANALYZE/DETERMINE
REPRESENTATIVE TREND
PREDICTORS

510 DETECT TREND(S)

512 GENERATE NOTIFICATION(S)/
SERVE QUERIES

QUERIES

516 RESOURCE
PROVISIONING
CONTROL

514 END

Figure 5

600

Figure 6

700

705
Collect post process consume

Figure 7

Europäisches
Patentamt

European
Patent Office

Office européen
des brevets

## EUROPEAN SEARCH REPORT

Application Number

EP 13 39 7547

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 571 195 A1 (TELEFONICA SA [ES]) 20 March 2013 (2013-03-20) * the whole document * ----- | 1-15 | INV. G06Q10/06 H04L12/24 |
| X | US 2013/064110 A1 (POLINATI CHINNA [US] ET AL) 14 March 2013 (2013-03-14) * the whole document * ----- | 1-15 | |
| X | US 2011/153387 A1 (MA SHENG [US]) 23 June 2011 (2011-06-23) * the whole document * ----- | 1-15 | |

| | | | TECHNICAL FIELDS SEARCHED (IPC) |
|---|---|---|---|
| | | | G06Q H04L |

The present search report has been drawn up for all claims

| Place of search | Date of completion of the search | Examiner |
|---|---|---|
| The Hague | 30 April 2014 | Guenov, Mihail |

EPO FORM 1503 03.82 (P04C01)

**ANNEX TO THE EUROPEAN SEARCH REPORT
ON EUROPEAN PATENT APPLICATION NO.**

EP 13 39 7547

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2014

| Patent document cited in search report | | | Publication date | Patent family member(s) | | Publication date |
|---|---|---|---|---|---|---|
| EP 2571195 | A1 | | 20-03-2013 | AR | 081041 A1 | 30-05-2012 |
| | | | | EP | 2571195 A1 | 20-03-2013 |
| | | | | US | 2013148525 A1 | 13-06-2013 |
| | | | | WO | 2011141586 A1 | 17-11-2011 |
| US 2013064110 | A1 | | 14-03-2013 | NONE | | |
| US 2011153387 | A1 | | 23-06-2011 | US | 2011153387 A1 | 23-06-2011 |
| | | | | WO | 2011084498 A2 | 14-07-2011 |

EPO FORM P0459

For more details about this annex : see Official Journal of the European Patent Office, No. 12/82